**Europäisches Patentamt**

**European Patent Office**

**Office européen des brevets**

(19)

(11) Veröffentlichungsnummer: **0 096 321**

**B1**

(12)

# EUROPÄISCHE PATENTSCHRIFT

(45) Veröffentlichungstag der Patentschrift:
02.11.88

(51) Int. Cl.⁴: **C 08 G 63/10**

(21) Anmeldenummer: **83105302.0**

(22) Anmeldetag: **28.05.83**

(54) **Verfahren zur Herstellung von Polycaprolacton.**

(30) Priorität: **09.06.82 DE 3221692**

(43) Veröffentlichungstag der Anmeldung:
**21.12.83 Patentblatt 83/51**

(45) Bekanntmachung des Hinweises auf die Patenterteilung:
**02.11.88 Patentblatt 88/44**

(84) Benannte Vertragsstaaten:
**BE DE FR GB NL**

(56) Entgegenhaltungen:
**DE-A-1 770 213**
**GB-A-1 272 572**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Mueller, Herbert, Dr., Carosstrasse 53, D-6710 Frankenthal (DE)**

EP 0 096 321 B1

### Beschreibung

Gegenstand der Erfindung ist ein Verfahren zur Herstellung von Polycaprolacton durch Polymerisation von ε-Caprolacton unter Verwendung ein- oder mehrwertiger Alkohole als Starter in Gegenwart von Bleicherden bei einer Temperatur von 50 bis 160°C.

ε-Caprolacton wird durch Verbindungen mit aktivem Wasserstoff, sogenannten Startern, wie Alkoholen oder Aminen, in Gegenwart von Katalysatoren, wie anorganischen oder organischen Säuren, Lewissäuren oder metallorganischen Verbindungen, bei Temperaturen von 20 bis 200°C polymerisiert. Die verwendeten Katalysatoren neigen jedoch zur Bildung von Nebenprodukten und Verfärbungen. Darüber hinaus müssen sie aus dem Endprodukt wieder abgetrennt werden, was einen erheblichen technischen Aufwand bedingt. Aus der FR-PS-1 588 484 ist bekannt, daß man als Katalysatoren saure Ionenaustauscher verwendet und nach der Polymerisation diese durch Filtration ab trennt. Das Verfahren hat jedoch den Nachteil, daß die Katalysatoren keine sehr hohe Aktivität aufweisen und lange Polymerisationszeiten in Kauf genommen werden müssen. Darüber hinaus ist die Lebensdauer der Katalysatoren verhältnismäßig gering. Entsprechend dem in der GB-PS-1 272 572 beschriebenen Verfahren verwendet man als Katalysatoren feinverteilten aktivierten Ton, wie Montmorillonit, der als Bleicherde bekannt ist. Die Abtrennung der feinteiligen Katalysatoren bereitet jedoch ebenfalls Schwierigkeiten. Darüber hinaus läßt die Aktivität zu wünschen übrig. Selbst mit einem Katalysatoranteil von 5 % sind Reaktionszeiten von 20 Stunden erforderlich, wobei nur ein Umsatz von 82 % erzielt wird. Außerdem verlieren die Katalysatoren bei mehrmaliger Anwendung sehr schnell an Aktivität.

Es war deshalb die technische Aufgabe gestellt, ein Verfahren zur Herstellung von Polycaprolacton zur Verfügung zu stellen, bei dem wenig Nebenprodukte anfallen, die Verfärbung vermindert wird, und zugleich die verwendeten Katalysatoren leicht abtrennbar sind und eine hohe Aktivität und Lebensdauer aufweisen.

Diese Aufgabe wird gelöst in einem Verfahren zur Herstellung von Polycaprolacton durch Polymerisation von ε-Caprolacton unter Verwendung ein- oder mehrwertiger Alkohole als Starter in Gegenwart von Bleicherden bei einer Temperatur von 50 bis 160°C, bei dem man ein Gemisch aus Caprolacton und ein- oder mehrwertigen Alkoholen über ein fest angeordnetes Katalysatorbett aus im wesentlichen wasserfreier geformter Bleicherde leitet.

Das neue Verfahren hat den Vorteil, daß es die Polymerisation in kürzerer Zeit mit hohem Umsatz ablaufen läßt. Darüber hinaus hat das neue Verfahren den Vorteil, daß die verwendeten Katalysatoren eine lange Lebensdauer haben und keine Nebenprodukte bilden. Ferner hat das neue Verfahren den Vorteil, daß die erhaltenen Polymerisate eine gute Farbzahl aufweisen, was sich auf die weitere Verarbeitung günstig auswirkt. Schließlich lassen sich die verwendeten Katalysatoren ohne Aufwand vom Polymerisat trennen.

Vorteilhaft geht man von ε-Caprolacton aus mit einem Wassergehalt < 0,5 Gew.-%, insbesondere < 0,1 Gew.-%.

Die Polymerisation wird unter Mitverwendung von ein- oder mehrwertigen Alkoholen durchgeführt Vorteilhaft verwendet man ein- oder mehrwertige aliphatische Alkohole, vorzugsweise zwei- oder mehrwertige aliphatische Alkohole.

Geeignete Alkohole sind beispielsweise Ethanol, Propanol, Butanol, Ethylenglycol, Propylenglycol, Butandiol, Polytetrahydrofuran, Glycerin, Trimethylolpropan oder Pentaerytrit. Besondere technische Bedeutung hat Polytetrahydrofuran erlangt.

Die Polymerisation von ε-Caprolacton wird in Gegenwart von im wesentlichen wasserfreier geformter Bleicherde durchgeführt Geeignete Bleicherden sind insbesondere Aluminiumhydrosilikate oder Aluminium-, Magnesiumhydrosilikate vom Typ des Montmorillonit, die durch Säure aktiviert sein können. Bleicherden werden z.B. beschrieben in Ullmann's Encyklopädie der technischen Chemie, 3. Auflage, Band 4, Seiten 541 - 545. Zur Herstellung der erfindungsgemäß verwendeten Formkörper aus im wesentlichen wasserfreien Bleicherden werden die handelsüblichen wasserhaltigen, gepulverten Bleicherden mit Wasser angeteigt, verknetet und zu Formkörpern, z. B. Tabletten, Kugeln oder Ringen verpreßt. Anschließend werden die wasserhaltigen Formkörper oberhalb 100°C, vorzugsweise bei Temperaturen von 150 bis 700°C bei Normaldruck oder unter vermindertem Druck gegebenenfalls in Gegenwart von unter den Reaktionsbedingungen inerten Gasen, z. B. Edelgasen, wie Helium oder Argon, insbesondere jedoch Stickstoff oder Luft, getrocknet. Die erfindungsgemäß verwendeten Katalysatorformlinge haben vorteilhaft einen Wassergehalt von ≦ 1 Gew.-%, vorzugsweise von 0,01 bis 0,5 Gew.-%, insbesondere von 0,01 bis 0,1 Gew.-%. Die geformten Bleicherden können beispielsweise in Form von Kugeln, Ringen, Zylindern oder Tabletten vorliegen. Bei Verwendung von kugelförmigen Formkörper haben die Kugeln im allgemeinen einen Durchmesser von 2 bis 15 mm, vorzugsweise 3 bis 5 mm. Als zylinderförmige Formkörper werden im allgemeinen Zylinder mit einer Länge von 2 bis 50 mm und einem Durchmesser von 2 bis 6 mm verwendet. Nicht kugel- oder zylinderförmige Formkörper weisen im allgemeinen pro Gewichtseinheit ein Volumen auf, das dem der zylinderförmigen Formkörper entspricht.

Nach dem erfindungsgemäßen Verfahren läßt sich Polycaprolacton mit beliebigen Polymerisationsgraden herstellen. Der Polymerisationsgrad wird durch das Molekularverhältnis von Starteralkohol zu Caprolacton bestimmt. Je kleiner dieses Verhältnis gewählt wird, um so höhere Molekulargewichte werden erreicht und umgekehrt. Wählt man die bevorzugten Arbeitsbedingungen, bei denen ein vollständiger Umsatz erzielt wird, so wird der Polymerisationsgrad durch die Stöchiometrie eindeutig bestimmt. Da Polycaprolactone mit durchschnittlichen Molekulargewichten von 300 bis 10 000, insbesondere solche mit durchschnittlichen Molekulargewichten von 500 bis 3000, praktisches Interesse finden, lassen sich über die Stöchiometrie die erforderlichen Starter Caprolacton-Verhältnisse ermitteln.

Erfindungsgemäß leitet man ein Gemisch aus Caprolacton und ein- oder mehrwertigen Alkoholen über ein fest angeordnetes Katalysatorbett aus im wesentlichen wasserfreier geformter Bleicherde.

Für die Polymerisation des ε-Caprolactons werden nur geringe Mengen der im wesentlichen wasserfreien geformten Bleicherde benötigt. Die Bleicherdeformkörper werden zweckmäßig in einem Reaktionsgefäß, beispielsweise einem Röhren- oder Schachtofen aufgeschüttet. Die gewählte Dimension der Katalysatorschüttung wird vorzugsweise von der Möglichkeit bestimmt, die Polymerisationswärme abzuführen. Vorteilhaft verwendet man langgestreckte zylinderförmige Reaktionsgefäße. Das Verhältnis von Innendurchmesser zur Länge der Reaktionsgefäße beträgt im allgemeinen 1 : 2 bis 1 : 100, vorzugsweise 1 : 10 bis 1 : 40. Die Reaktionsgefäße können senkrecht oder waagerecht angeordnet sein. Vorzugsweise verwendet man senkrecht stehende Rohrreaktoren, bei denen der Rohrdurchmesser 10 bis 100 mm beträgt. Legt man weniger Wert auf eine genaue Temperaturführung bei der Polymerisation, so können als Reaktionsgefäße auch einfache Schachtöfen eingesetzt werden. Durch Kreisführen des Reaktionsaustrages und zwischenzeitlichem Wärmeaustausch lassen sich aber auch solche Reaktoren in isothermer Arbeitsweise betreiben. Dem Produktkreislauf wird dann gerade soviel Reaktionsprodukt entnommen, wie ihm pro Zeiteinheit Ausgangsmaterial im frischen Zulauf zugeführt wird.

Zur Durchführung der Polymerisation wird über die im wesentlichen wasserfreien Bleicherdeformkörper eine Mischung aus Caprolacton und Starteralkohole nach bekannten Reaktionsweisen, beispielsweise nach der Riesel- oder Sumpffahrweise geleitet. Bei der bevorzugt angewandten Sumpffahrweise wird das gesamte Katalysatorvolumen ohne Ausbildung einer Gasphase von der Mischung aus Caprolacton und Initiator durchströmt. Die Polymerisation wird bei einer Temperatur von 50 bis 160° C bei Normaldruck durchgeführt Vorteilhaft hält man eine Temperatur von 60 bis 120° C ein. Die Verweilzeit am Katalysator beträgt je nach angewandter Temperatur vorzugsweise von 5 bis 8 Stunden. Eine verlängerte Reaktionszeit hat keinen Einfluß auf die Qualität des hergestellten Polycaprolactons. Verkürzt man die Verweilzeit am Katalysator, so erzielt man einen nur unvollständigen Umsatz. Die dann erhaltenen Endprodukte haben ein geringeres Molekulargewicht als man es aus den Verhältnis der Einsatzprodukte (ε-Caprolacton und Starter-Alkohole) errechnet. Diese Arbeitsweise kann auch gezielt angewandt werden, wenn man in Kauf nimmt, daß ein Teil des Caprolactons zurückgewonnen wird, was durch einfaches Abdestillieren leicht zu bewerkstelligen ist.

Das neue Verfahren ist insofern bemerkenswert, als der geformte im wesentlichen wasserfreie Bleicherdekatalysator eine höhere Aktivität aufweist als pulverförmige Bleicherde, die zur Herstellung der Formkörper dient. Dies gilt um so mehr als im allgemeinen feinteilige Katalysatoren eine sehr viel höhere spezifische Aktivität aufweisen als geformte Katalysatoren. Die geformten im wesentlichen wasserfreien Bleicherdekatalysatoren behalten über einen Zeitraum von mehr als einem Jahr die ursprüngliche feste Form, verursachen keinerlei Abrieb und weisen selbst nach einem Jahr Polymerisationsdauer eine unverändert hohe Aktivität auf. Durch die Anwendung eines fest angeordneten Katalysatorbetts gelingt es, unter Verwendung der geformten Bleicherdekatalysatoren die technisch aufwendige Abtrennung der Katalysatoren aus dem Endprodukt zu vermeiden. Das Polymerisationsverfahren für ε-Caprolacton wird dadurch sehr vereinfacht und ist in bezug auf die Qualität des Endproduktes, insbesondere hinsichtlich Farbe und Polymerisationsgrad reproduzierbar.

Das nach dem Verfahren der Erfindung erhältliche Polycaprolacton eignet sich z. B. zur Herstellung von Polyurethanen.

Das Verfahren nach der Erfindung sei in folgenden Beispielen veranschaulicht. Die genannten Teile sind Gewichtsteile. Sie verhalten sich zu den Volumenteilen wie Kilogramm zu Liter.

**Beispiel 1**

Strangpreßlinge mit einem Durchmesser von 3 mm und einer durchschnittlichen Länge von 10 bis 20 mm werden aus käuflicher Bleicherde durch Anteigen mit Wasser und Verformen hergestellt und 4 Stunden bei 220° C getrocknet.

Ein mit einem thermostatisiertem Kühlmantel versehenes Reaktionsrohr mit einem Volumen von 1 Volumenteil und einem Verhältnis Durchmesser zu Länge von ungefähr 5 : 70 wird mit den oben beschriebenen getrockneten Strangpreßlingen gefüllt. Durch das Reaktionsrohr leitet man von oben nach unten eine Mischung aus 1500 Teilen Polytetrahydrofuran mit einem Molgewicht von ca. 990 und 1500 Teilen ε-Caprolacton. Man läßt das Polymerisat durch einen Siphon austreten. Dadurch bleibt das Reaktionsrohr ganz mit Flüssigkeit gefüllt. Sobald das Reaktionsprodukt das Reaktionsrohr verläßt, wird es erneut oben auf die Katalysatorschüttung gepumpt. Die Reaktionstemperatur im Ineren des Rohres beträgt 100° C. Der Frischzulauf erfolgt mit einer Geschwindigkeit, die eine Verweilzeit an der Katalysatorschüttung von ca. 10 Stunden ergibt. Man erhält dann einen Reaktionsaustrag, der nur noch 1 bis 2 Gew.-% Caprolacton enthält. Der Reaktionsaustrag ist frei von Katalysatorresten und kann nach destillativem Abtrennen des monomeren Caprolactons direkt - ohne weitere Reinigung - zur Herstellung von z. B. Polyurethanharzen verwendet werden. Das mittlere Molekulargewicht des Polymerisates aus Tetrahydrofuran und Caprolacton liegt zwischen 1940 und 1980.

## Beispiel 2

Handelsübliche 4-mm-Katalysatorkugeln aus Bentonit werden in einem Stickstoffstrom bei 180° C 8 Stunden lang getrocknet und dann in das im Beispiel 1 beschriebene Reaktionsrohr eingefüllt. Die im Beispiel 1 beschriebene Reaktionsmischung aus Polytetrahydrofuran und ε-Caprolacton wird sodann bei 110° C während 9 Stunden Verweilzeit polymerisiert. Man erhält ein Polycaprolacton-Polymeres, das etwa identisch mit dem des Beispiels 1 ist.

## Beispiel 3

Eine Reaktionslösung aus 3C Teilen Butandiol-(1,4) und 637 Teilen ε-Caprolacton wird in der im Beispiel 1 beschriebenen Weise und einem Katalysator gemäß Beispiel 2 unter Einhalten einer Verweilzeit von 15 Stunden bei 105° C polymerisiert. Das erhaltene Polymerisat wird im Vakuum von geringen Anteilen nicht umgesetzten Alkohols bzw. ε-Caprolactons befreit. Man erhält Polycaprolacton, dessen Molekulargewicht sich aus der Hydroxylzahl zu etwa 1940 berechnet. Der Umsatz des Caprolactons ist praktisch vollstänig.

Ein ähnliches Polymerisat erhält man, wenn man als Ausgangsmischung 80 Teile Neopentylglykol als Initiatoralkohol und 547 Teile ε-Caprolacton als Monomeres verwendet. Auch in diesem Falle erzielt man einen nahezu 100-%-igen Umsatz.

## Patentansprüche

1. Verfahren zur Herstellung von Polycaprolacton durch Polymerisation von ε-Caprolacton unter Verwendung ein- oder mehrwertiger Alkohole als Starter in Gegenwart von Bleicherden bei einer Temperatur von 50 bis 160° C, dadurch gekennzeichnet, daß man ein Gemisch aus Caprolacton und ein- oder mehrwertigen Alkoholen über ein fest angeordnetes Katalysatorbett aus geformter Bleicherde mit einem Wassergehalt von ≤ Gew.-% leitet.

2. Verfahren nach Anspruch 1, dadurch gekennzeichnet, daß man geformte Bleicherde verwendet, die durch Anteigen von Bleicherde mit Wasser, Formen der so erhaltenen Masse und Trocknen der Formlinge bei einer Temperatur von 150 bis 700° C erhalten worden ist.

3. Verfahren nach den Ansprüchen 1 und 2, dadurch gekennzeichnet, daß man Polytetrahydrofuran als mehrwertigen Alkohol verwendet.

4. Verfahren nach den Ansprüchen 1 bis 3, dadurch gekennzeichnet, daß man die Polymerisation in Sumpffahrweise ohne Ausbildung einer Gasphase durchführt.

## Claims

1. A process for the preparation of polycaprolactone by polymerization of ε-caprolactone using a monohydric or polyhydric alcohol as an initiator, in the presence of a bleaching earth at from 50 to 160° C, wherein a mixture of caprolactone with a monohydric or polyhydric alcohol is passed over a fixed-bed catalyst comprising molded bleaching earth having a water content ≤ 1 % by weight.

2. A process as claimed in claim 1, wherein the molded bleaching earth used has been obtained by converting the bleaching earth to a paste with water, molding the resulting material, and drying the moldings at from 150 to 700° C.

3. A process as claimed in claim 1 or 2, wherein polytetrahydrofuran is used as a polyhydric alcohol.

4. A process as claimed in claim 1 or 2 or 3, wherein polymerization is carried out in a liquid-phase procedure, without a gas phase being formed.

## Revendications

1. Procédé de préparation de polycaprolactone par polymérisation de ε-caprolactone en utilisant des alcools mono- ou plurivalents comme initiateurs en présence de terres colorantes, à une température de 50 à 160° C, caractérisé par le fait que l'on amène un mélanqe de caprolactone et d'alcools mono- ou plurivalents sur un lit à l'état solide de catalyseur en terres décolorantes à teneur en eau ≤ 1 % en poids.

2. Procédé selon la revendication 1, caractérisé par le fait que l'on utilise des terres décolorantes mises en forme, qui ont été obtenues par empâtage de terres décolorantes avec de l'eau, mise en forme des masses ainsi obtenues et séchage des briquettes à une température de 150 à 700°C.

3. Procédé selon les revendications 1 et 2, caratérisé par le fait que l'on utilise du polytétrahydrofurane comme alcool monovalent.

4. Procédé selon les revendications 1 à 3, caractérisé par le fait que l'on effectue la polymérisation à la manière d'une pâte sans formation d'une phase gazeuse.